# EUROPÄISCHE PATENTSCHRIFT

(11) **EP 2 177 776 B1**
(45) Veröffentlichungstag und Bekanntmachung des Hinweises auf die Patenterteilung: **17.07.2019**
(21) Anmeldenummer: 09013045.1
(22) Anmeldetag: 15.10.2009
(51) Int. Cl.: F16B 37/06

(54) **Vorrichtung bestehend aus einem Befestigunselement und einem Blechteil sowie ein Verfahren zur Herstellung einer solchen Vorrichtung**
Assembly composed of an attachment element and a piece of sheet metal and a method for producing such an assembly
Assemblage comprenant un élément de fixation et un élément en tôle et procédé de fabrication d'un tel élément d'ensemble

(30) Priorität: 20.10.2008 DE 102008052383
(43) Veröffentlichungstag der Anmeldung: 21.04.2010
(73) Patentinhaber: Profil Verbindungstechnik GmbH & Co. KG, 61381 Friedrichsdorf (DE)
(72) Erfinder: Babej, Jiri, 35423 Lich (DE); Humpert, Richard, 61231 Bad Nauheim (DE); Sowa, Christian, 63075 Offenbach (DE); Vieth, Michael, 61118 Bad Vilbel (DE)
(74) Vertreter: Manitz Finsterwald Patent- und Rechtsanwaltspartnerschaft mbB

(56) Entgegenhaltungen:
- DE-U1- 29 522 323
- JP-A- 2005 106 183
- US-A- 5 251 370
- US-A1- 2007 214 624

## Beschreibung

Die vorliegende Erfindung betrifft ein Zusammenbauteil bestehend aus einem Befestigungselement und einem Blechteil sowie ein Verfahren zur Herstellung eines solchen Zusammenbauteils. Bei der Herstellung von PKW-Karosserien und -teilen ist es gang und gäbe mit Befestigungselementen zu arbeiten, die in Form von Nietelementen, Stanz- und Nietelementen oder Einpresselementen vorliegen.

Bei einem Nietelement wird das Element in einem vorgelochten Blechteil eingesetzt und durch Umbördeln des Nietabschnitts des Befestigungselements am Blechteil vernietet. Das Befestigungselement selbst hat ein Befestigungsteil, d.h. entweder ein Innengewinde oder einen Bolzenschaft mit Außengewinde, wodurch ein weiteres Bauteil an das Blechteil unter Anwendung einer Schraube bzw. einer Mutter befestigt werden kann. Stanz- und Nietelemente sind selbststanzend ausgebildet, d.h. das Element schneidet selbst das Loch im Blechteil und wird anschließend mit dem Blechteil vernietet. Bei Einpresselementen wird das Blechteil wiederum auch vorgelocht und das Element dann durch das Loch hindurch geführt und mit dem Blechteil verpresst, so dass Blechmaterial in Hinterschneidungen des Einpresselementes hineinfließt und das Einpresselement gegenüber dem Blechteil verriegelt, so dass es fest am Blechteil befestigt ist und nicht ohne weiteres aus dem Blechteil herausgepresst werden kann.

Solche Befestigungselemente haben im PKW-Bau zum Großteil Schweißelemente verdrängt, die bisher an Karosserieblechen und dergleichen angeschweißt wurden. Das Anschweißen von Elementen lässt sich einerseits schlecht in die Herstellung der einzelnen Blechteile durch mechanische Verformung integrieren und führt aber auch zu einer ungewollten Verschmutzung des Blechteils. Ferner können Schweißelemente und kann auch mit verschiedenen Blechteilen nicht verwendet werden, beispielsweise dann, wenn diese vorlackiert sind oder aus zwei Blechteillagen bestehen, gegebenenfalls mit einer dazwischen gelegten Kunststoffmembran. Sie können auch dann nicht verwendet werden, wenn es sich bei dem Blechteil um ein hochfestes Teil handelt, da die mit der Anschweißung einhergehende Wärme zu einer unannehmbaren Herabsetzung der Blecheigenschaften im Bereich der Anschweißstelle führt. Bei der Herstellung von Blechteilen für PKWs werden große Stückzahlen benötigt und die in Frage kommenden Blechteildicken liegen üblicherweise im Bereich von 0,6 mm bis 2,5 mm, gelegentlich darüber hinaus bis 3 mm oder etwas mehr.

Aus der US-PS-5,251,370 ist beispielsweise ein Befestigungselement in Form eines Mutterelements bekannt, das einen Flanschteil größeren Durchmessers und einen Schaftteil kleineren Durchmessers aufweist, der sich vom Flanschteil wegerstreckt und an seinem dem Flanschteil abgewandten Ende in einen zylinderförmigen Nietabschnitt übergeht, dessen Außenseite zumindest im Wesentlichen bündig mit der Außenseite des Schafteils liegt, d.h. den gleichen Durchmesser aufweist, wobei die dem Schaftteil zugewandte Seite des Flanschteils eine Blechanlageschulter bildet, und Verdrehsicherungsmerkmale am Schaftteil und/oder im Bereich der Blechanlageschulter vorgesehen sind.

Ein Befestigungselement dieser Art wird entsprechend dem genannten US-Patent mittels des so genannten Klemmlochnietverfahrens am Blechteil angebracht. Zu diesem Zweck wird das Blechteil vorgelocht und der Bereich um die Vorlochung zu einer konusförmigen Ausformung bzw. zu einem konusförmigen Bund verformt. Bei der Durchführung des Nietabschnitts des Elements durch das Blechteil, die von der Seite der konusförmigen Ausformung erfolgt, wird der Nietabschnitt umgebördelt und geweitet und es wird gleichzeitig die konusförmige Ausformung zumindest teilweise rückgängig gemacht, wodurch das Loch der konusförmigen Ausformung im Durchmesser verkleinert wird. Es erfolgt eine Art Würgegriff zwischen dem Blechteil und dem Befestigungselement, der für ausgezeichnete, mechanische Eigenschaften der Verbindung zwischen dem Befestigungselement und dem Blechteil sorgt. Die konusförmige Ausformung des Blechteils wird für unterschiedliche Blechdicken unterschiedlich gestaltet, so dass es gelingt, mit einem Element verschiedene Blechdicken abzudecken.

In der Patentschrift wird zum Ausdruck gebracht, dass das Element mit Blechteildicken bis zum 4 mm verwendet werden kann, wobei, wie oben gesagt, Blechteildicken oberhalb von 3 mm im PKW-Bau relativ selten sind.

Nietelemente finden auch bei der Herstellung von LKWs Anwendung, jedoch in einem weitaus geringeren Ausmaß. Im Wesentlichen ist nur die Anwendung von Nietelementen aus der PKW-Herstellung bekannt, die auch in dünnen Blechteilen von LKWs, beispielsweise im Bereich der Fahrerkabine, zur Anwendung gelangen. Stabilere Blechteile der LKWs, d.h. mit Blechdicken größer als 3 mm und üblicherweise von 4 mm und noch größer, sind - wenn überhaupt - nur in den seltensten Fällen mit Nietelementen versehen, da die verfügbaren Nietelemente eben nicht für solche dicken Blechteile ausgelegt sind. Ferner werden weitaus weniger LKWs im Vergleich zu PKWs hergestellt. Die bei der LKW-Herstellung verwendeten Verfahren führen dazu, dass Schweißelemente dort dominieren.

Die Aufgabe der vorliegenden Erfindung ist es, ein Zusammenbauteil bestehend aus einem Nietelement und einem Blechteil sowie ein Verfahren zur Herstellung eines solchen Zusammenbauteils vorzuschlagen, das selbst bei geringeren Stückzahlen eine kostengünstige Lösung darstellt und rationell verwendet werden kann.

Zur Lösung dieser Aufgabe wird erfindungsgemäß ein Zusammenbauteil der oben genannten Art vorgeschlagen, dass sich dadurch auszeichnet, dass das Befestigungselement zur Anwendung mit Blechteilen mit Dicken im Bereich von 3 mm und größer ausgelegt ist, und dass das Blechteil sowohl im unmittelbaren Bereich der Anbringung des Befestigungselements als auch in radialen Richtungen benachbart zur Anbringungsstelle vor und nach Anbringung des Befestigungselements in einer Ebene liegt und
a) bei relativ dünnen Blechteilen das Blechteil eine glatt gelochte zylindrische Öffnung aufweist, die einen Durchmesser hat, der zumindest im Wesentlichen dem Durchmesser des Schaftteils entspricht, wobei der zylindrische Nietabschnitt zu einem Nietbördel umgeformt ist, das auf der der Blechanlageschulter abgewandten Seite des Blechteils anliegt, oder
b) bei Blechteilen mittlerer Dicke das Blechteil ein gestuftes Loch aufweist mit einem zylindrischen, der Blechanlageschulter zugewandten Lochteil kleineren Durchmessers, der dem Durchmesser des Schaftteils zumindest im Wesentlichen entspricht und mit einem Lochbereich größeren Durchmessers, der den zu einem Nietbördel umgebördelten Nietabschnitt aufnimmt, oder
c) bei relativ dicken Blechteilen, bei denen das Blechteil eine Dicke aufweist, die zumindest im Wesentlichen der Gesamtlänge des Schaftteils und des Nietabschnitts entspricht oder dicker ist, das Blechteil mit einer konusförmigen Lochung vorgesehen ist, die in Richtung von der die Blechanlageschulter zugewanden Seite des Blechteils zu der dieser abgewandten Seite hin divergiert, wobei der zylindrische Nietabschnitt zu einem konusförmigen Nietbördel umgeformt ist, das in der konusförmig divergierenden Lochung verkeilt ist.

Es wird somit ein Befestigungselement vorgeschlagen, das zwar eine Grundform hat, die an sich bekannt ist, dass aber durchaus auch zur Anwendung mit Blechteilen dicker als 3 mm verwendet werden kann, wenn das Blechteil entsprechend vorbearbeitet wird.

Es ist zunächst wesentlich, dass das Blechteil zumindest im Bereich der Anbringung des Befestigungselements sowohl vor als auch nach der Anbringung des Befestigungselements in einer Ebene liegt. D.h., das Blechteil wird nicht konusförmig angestellt wie beim Klemmlochnieten, sondern das Blech bleibt in einer Ebene, sowohl bei der Vorlochung als auch bei der Anbringung des Elements.

Dies schließt zwar nicht aus, dass das Blech vor oder nach dem Lochvorgang zu einer Sicke umgeformt wird, wobei das Befestigungselement im planaren Bodenbereich der Sicke angebracht wird, sondern das bedeutet, dass das Blechteil sowohl im unmittelbaren Bereich der Anbringung des Befestigungselements als auch in radialen Richtungen benachbart zur Anbringungsstelle in einer Ebene liegt.

Bei relativ dünnen Blechteilen, die eine Dicke zwischen 3 mm und 4,5 mm aufweisen können, kann der Nietabschnitt der aus der Seite des Blechteils herausragt, die der Blechanlageschulter abgewandt ist, zu einem Nietbördel umgebördelt werden, wobei das Nietbördel dann sozusagen auf der Unterseite des Blechs anliegt, wenn die Blechanlageschulter des Flanschteils auf der Blechoberseite anliegt. Um eine planare Anschraubsituation zu erreichen, muss dann entweder mit einer Scheibe mit einem Loch, dass das Nietbördel aufnimmt, oder mit einer aufgeweiteten Bohrung im anzuschraubenden Bauteil gearbeitet werden.

An sich ist der Gewindedurchmesser des Befestigungselements nicht auf irgendwelche bestimmten Größen beschränkt, nur werden beim LKW-Bau und gerade bei dickeren Blechen nur selten Schrauben verwendet, die Gewinde kleiner als M8 aufweisen, wobei Gewindegrößen von M20 und größer keine Seltenheit sind.

Bei etwas dickeren Blechen im Bereich zwischen 4,5 mm und 6,5 mm wird erfindungsgemäß vorzugsweise mit einem gestuften Loch im Blechteil gearbeitet, wobei das Nietbördel in den Lochbereich größeren Durchmessers aufgenommen wird, d.h. nicht aus der Unterseite des Blechteils hinausragt. Dies macht die Verwendung einer gesonderten Scheibe oder das Vorsehen einer gesonderten Ausnehmung im anzuschraubenden Bauteil überflüssig.

Für dicke Blechteile mit einer Dicke größer als 6,5 mm wird vorzugsweise durch einen Lochvorgang ein Loch im Blechteil erzeugt, das in Richtung von der Seite des Blechteils, die der Blechanlageschulter zugewandt ist zu der abgewandten Seite des Blechteils gehend konusförmig divergierend ausgebildet ist, und es wird der Nietabschnitt dann nicht zu einem umgelegten Nietbördel, sondern zu einer Konusform verformt, so dass der Nietabschnitt sich in der konusförmig divergierenden Lochung verkeilt und auf diese Weise verhindert, dass das Befestigungselement aus dem Blechteil herausgepresst wird.

Das Befestigungselement ist normalerweise als Mutterelement ausgebildet, d.h. sowohl der Flanschteil als auch der Schaftteil sind hohl ausgebildet mit einem ein Innengewinde aufweisenden Hohlraum. Das Gewinde erstreckt sich jedoch nicht in den Nietabschnitt hinein, da es sonst durch die Umbördelung des Nietabschnitts verformt wird. Stattdessen geht der Nietabschnitt üblicherweise über eine Ringschulter und einen Einlaufkonus in der hohle Schaftteil, d.h. in das Gewinde hinein. Das Vorsehen einer solchen Ringschulter ermöglicht es einerseits, den Nietabschnitt in der radialen Dicke auf ein geeignetes Maß klein und gut verformbar zu halten, den Schaftteil aber dennoch ausreichend dick auszubilden, dass das Befestigungselement eine erhebliche Stabilität hat und damit der Verwendung in einem LKW gerecht wird.

Diese Ausführungsform ist besonders günstig, weil eine konusförmig divergierende Lochung dieser Art presstechnisch erfindungsgemäß relativ leicht erzeugt werden kann, und zwar auch über erhebliche Blechdicken, wobei das konusförmige Nietbördel an einer der Gesamtlänge des Schaftteils mit Nietabschnitt entsprechenden Stelle der Lochung erfolgt. Es ist lediglich erforderlich, eine für die jeweilige Blechdicke passende Matrize auszuwählen, um die Aufweitung des Nietabschnitts zu der Konusform zu erreichen.

Bei der Anbringung des Befestigungselements an das jeweilige Blechteil werden etwaige Verdrehsicherungsnasen, die am Befestigungselement vorgesehen sind, in das Blechteil hineingepresst und bilden dort entsprechende Vertiefungen, die im Zusammenhang mit den Verdrehsicherungsnasen die erforderlich Verdrehsicherung erzeugen.

Die Verdrehsicherungsnasen erstrecken sich vorzugsweise in axialer Richtung des Schaftteils an diesem entlang und/oder sie erstrecken sich in radialen Richtungen an der Blechanlageschulter.

An dieser Stelle soll zum Ausdruck gebracht werden, dass es nicht zwingend erforderlich ist, das Element so auszulegen, dass dünnere Bleche im Bereich zwischen 3 bis 4,5 mm, Blechteile mittlerer Dicke eine Dicke im Bereich von 4,5 bis 6,5 mm und dickere Blechteile eine Dicke größer als 6,5 mm aufweisen.

Die Aussage, dass bei dünneren Blechteilen mit einer Dicke im Bereich von 3 bis 4,5 mm sich das Nietbördel sich auf der Unterseite des Blechteils befindet, bedeutet, dass der Schaftteil des Element so ausgelegt ist, dass er eine Länge von etwa 3 mm aufweist, während der Nietabschnitt ebenfalls eine axiale Lage von etwa 2,5 mm hat. Da die Gesamtlänge des Gewindes durch die axiale Höhe des Flanschteils und die axiale Länge des Schaftteils bestimmt ist, könnte die Flanschteilhöhe erhöht und Flanschteillänge verringert werden, wodurch das Nietbördel auf der Unterseite des Blechteils dann bei noch dünneren Blechen möglich wäre mit dem Ergebnis, dass Blechteile mittlerer Dicke dann bei niedrigen Stärken anfangen, beispielsweise jetzt bei 4 mm, da auch bei dieser Blechstärke ein gestuftes Loch hergestellt werden kann, bei dem der Lochbereich größeren Durchmessers auch geeignet ist, den umgebördelten Nietabschnitt aufzunehmen, so dass, wie oben erläutert, sich eine planare Anschraubfläche ergibt mit den daraus resultierenden Vorteilen. Es würde aber auch bedeuten, dass man für Blechteile mit einer Dicke von beispielsweise 5,5 mm dann eine Lochung vorbereiten könnte, die konusförmig divergiert, so dass das gestufte Loch, was in der Herstellung etwas komplizierter ist, gar nicht mehr erforderlich wäre.

Aus den obigen Erläuterungen geht hervor, dass man nicht alle drei erfindungsgemäßen Möglichkeiten haben muss, und dass besonders bei einer Lochung mit konusförmig divergierender Lochung sich besondere Vorteile ergeben, zumal eine solche Konusform relativ leicht herzustellen ist.

Der Flanschteil des Befestigungselements ist im radialen Querschnitt kreisrund. Das Element kann somit durch Kaltverformung vorteilhaft aus Rundstabmaterial hergestellt werden. Durch die Herstellung aus Rundstabmaterial kann der Flanschteil in Seitenansicht eine ballige Form aufweisen, die einerseits eine ausreichende Festigkeit des Flanschteils durch Kaltverformung und andererseits eine ausreichende radiale Erstreckung der Blechanlageschulter sicherstellt, so dass die Flächenpressung klein gehalten werden kann. Auch die Vermeidung von scharfen Kanten, die durch die ballige Form nicht vorkommen, ist von Vorteil.

Man kann somit drei unterschiedliche Arten der Anbringung des Befestigungselements zur Herstellung des Zusammenbauteils ins Auge fassen. Mit einem dünneren Blechteil wird dieses mit einem Lochstempel vorgelocht, um eine glatt gelochte zylindrische Öffnung auszubilden, die einen Durchmesser hat, der zumindest im Wesentlichen dem Durchmesser des Schaftteils entspricht, wobei der Schafteil des Befestigungselements dann durch die zylindrische Lochung hindurchgepresst wird bis die Blechanlageschulter des Flanschteils an der einen Seite des Blechteils anliegt und die Verdrehsicherungsmerkmale bzw. -nasen sich in das Blechteil eingegraben haben und der zylindrische Nietabschnitt mittels einer geeigneten Matrize zu einem Nietbördel umgeformt ist, das auf der der Blechanlageschulter abgewandten Seite des Blechteils anliegt.

Mit einem Blechteil mittlerer Dicke wird das Verfahren derart durchgeführt, dass ein gestuftes Loch im Blechteil angefertigt wird mit einem zylindrischen, der Blechanlageschulter zugewandten Lochteil kleineren Durchmessers, der dem Durchmesser des Schaftteils zumindest im Wesentlichen entspricht und mit einem Lochbereich größeren Durchmessers, wobei der Schafteil des Befestigungselements durch das Loch hindurchgepresst wird bis die Blechanlageschulter des Flanschteils an der einen Seite des Blechteils anliegt und die Verdrehsicherungsmerkmale bzw. - nasen sich in das Blechteil eingegraben haben, und der zylindrische Nietabschnitt mittels einer geeigneten Matrize zu einem Nietbördel umgeformt wird, das in den Lochbereich größeren Durchmessers aufgenommen wird.

Das gestufte Loch wird beispielsweise durch einen Bohrvorgang oder durch einen zweistufigen Pressvorgang hergestellt.

Mit einem relativ dicken Blechteil wird so vorgegangen, dass dieses mit einem Lochstempel oder anderweitig vorgelocht wird, um eine konusförmigen Lochung auszubilden, die in Richtung von der der Blechanlageschulter zugewandten Seite des Blechteils zu der dieser abgewandten Seite hin divergiert, wobei die Lochung auf der der Blechanlageschulter zugewandten Seite einen Durchmesser hat, der zumindest im Wesentlichen dem Durchmesser des Schaftteils entspricht, wobei der Schafteil des Befestigungselements durch die Lochung hindurchgepresst wird bis die Blechanlageschulter des Flanschteils an der einen Seite des Blechteils anliegt und die Verdrehsicherungsmerkmale bzw. -nasen sich in das Blechteil eingegraben haben, und der zylindrische Nietabschnitt mittels einer geeigneten Matrize zu einem konusförmigen Nietbördel umgeformt wird, das sich in der konusförmig divergierenden Lochung verkeilt.

Besonders günstig ist es, wenn sich die konusförmig erstreckende Lochung an einen zylindrischen Bereich der Lochung anschließt, der benachbart zur Blechanlageschulter ausgebildet wird. Der zylindrische Bereich der zumindest im Wesentlichen den gleichen Durchmesser wie der Schaftteil aufweist, sorgt einerseits für eine saubere Führung des Schaftteils des Befestigungselements und andererseits dafür, dass eine möglichst große Verdrehsicherheit in diesem Bereich erzeugt wird, da die Verdrehsicherungsnasen dann über ihre gesamte radiale Tiefe entsprechende Furchen im Lochrand erzeugen.

Die konusförmige Lochung erfolgt vorzugsweise unter Anwendung eines Lochstempels mit einem Durchmesser entsprechend dem Durchmesser des Schaftteils in Kombination mit einer Lochmatrize größeren Durchmessers. Eine solche Auslegung führt dazu, dass der Lochstempel im Anfangsbereich der Lochung ein glattwandiges Loch schneidet und anschließend einen konusförmigen Stanzbutzen aus der restlichen Dicke des Blechteils heraus bricht, wobei der maximale Durchmesser des Stanzbutzens durch den Durchmesser des Loches der Matrize bestimmt wird. Die Konizität des Stanzbutzens wird durch die Blechdicke, den Durchmesser des Lochstempels und dem Durchmesser des Loches der Matrize bestimmt.

Die Erfindung wird nachfolgend anhand von Ausführungsbeispielen und unter Bezugnahme auf die Zeichnungen näher erläutert, in welcher zeigen:
- Fig. 1A bis 1C: ein Befestigungselement, das entsprechend der Erfindung mit einem Blechteil zu einem Zusammenbauteil kombiniert werden kann, und zwar in einer Stirnansicht auf den Nietabschnitt in Fig. 1A in einer teilweise axial geschnittenen seitlichen Darstellung gemäß Fig. 1B und in einer perspektivischen Darstellung gemäß Fig. 1C,
- Fig. 2A bis 2C: eine Zeichnungsreihe zur Darstellung der Anbringung des Befestigungselements in einem dünneren Blechteil,
- Fig. 3A bis 3C: eine Skizzenreihe zur Darstellung der Anbringung des Befestigungselements gemäß Fig. 1A bis 1C an einem Blechteil mittlerer Dicke,
- Fig. 4A bis 4D: eine Zeichnungsreihe zur Darstellung der Anbringung des Befestigungselements gemäß Fig. 1A bis 1C an einem Blechteil mittlerer Dicke bzw. größerer Dicke,
- Fig. 5A bis 5D: prinzipiell die gleiche Situation wie in Fig. 3, jedoch einschließlich der dafür verwendeten Matrize und für die Gewindegrößen M8 (Fig. 5A), M10 (Fig. 5B), M12 (Fig. 5C), M14 (Fig. 5D),
- Fig. 6A bis 6D: prinzipiell die gleiche Situation wie in Fig. 4, jedoch einschließlich der dafür verwendeten Matrize und für die Gewindegrößen M8 (Fig. 6A), M10 (Fig. 6B), M12 (Fig. 6C), M14 (Fig. 6D),
- Fig. 7A bis 7D: eine Zeichnungsreihe entsprechend den Fig. 6A bis 6D, jedoch für die Anbringung des Befestigungselements gemäß Fig. 1A bis 1C an ein einem dickeren Blechteil zusammen mit den dafür verwendeten Matrizen und für die Gewindegrößen M8 (Fig. 7A), M10 (Fig. 7B), M12 (Fig. 7C), M14 (Fig. 7D),

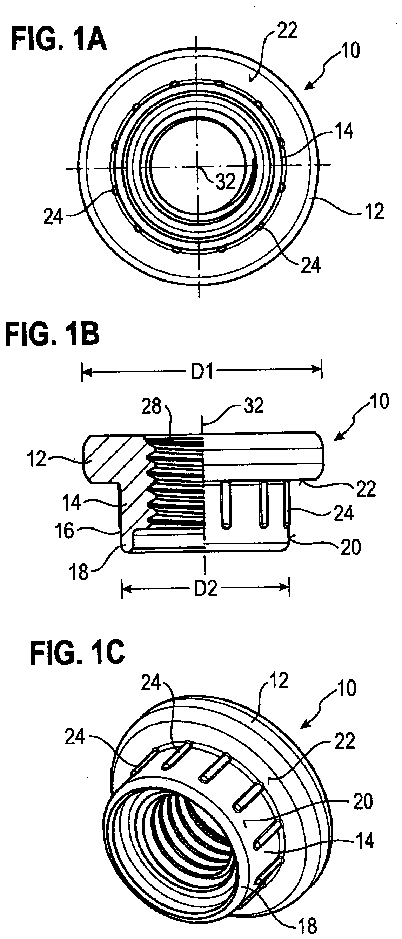

Figuren 1A bis 1C zeigen zunächst ein Befestigungselement 10, das einen Flanschteil 12 größeren Durchmessers D1 und einen Schaftteil 14 kleineren Durchmessers D2 ufweist, der sich vom Flanschteil 12 wegerstreckt und an seinem dem Flanschteil 12 abgewandten Ende 16 in einen zylinderförmigen Nietabschnitt 18 übergeht, dessen Außenseite 20 zumindest im Wesentlichen bündig mit der Außenseite des Schafteils 14 liegt, d.h. den gleichen Durchmesser D2 aufweist. Die dem Schaftteil 14 zugewandte Seite des Flanschteils bildet eine Blechanlageschulter 22, und Verdrehsicherungsmerkmale 24 sind am Schaftteil 14 vorgesehen. Die Verdrehsicherungsmerkmale könnten auch an der Blechanlageschulter vorgesehen werden (nicht gezeigt) oder sowohl an der Blechanlageschulter 22 als auch am Schaftteil 14 angeordnet werden, beispielsweise mit rechtwinkeliger Form oder mit einer in Seitenansicht dreieckiger Form.

Das Befestigungselement 10 ist zur Anwendung mit Blechteilen mit Dicken im Bereich von 3 mm und größer ausgelegt.

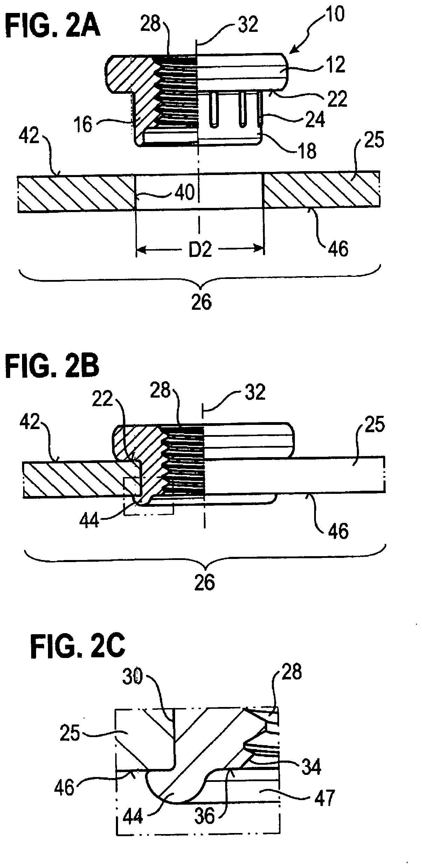

Die Anbringung an einem relativ dünnen Blechteil wird nunmehr anhand der Fig. 2A bis 2C beschrieben. Wie in Fig. 2A und 2B gezeigt, liegt das Blechteil 25 zumindest im Bereich 26 der Anbringung des Befestigungselements vor und nach Anbringung des Befestigungselements in einer Ebene.

Es handelt sich bei dem hier gezeigten Befestigungselement um ein Mutterelement mit Innengewinde 28. Das Befestigungselement könnte gegebenenfalls auch als Bolzenelement ausgelegt werden. In diesem Falle wäre der Schaftteil 14 mit einem Gewindeteil verlängert und der zylindrische Nietabschnitt wäre dann in an sich bekannter weise als Rock ausgebildet, ähnlich wie beispielsweise in der eingangs genannten US-PS-5,251,370 in Fig. 8 gezeigt.

Die Verdrehsicherungsmerkmale 24, die durch Verdrehsicherungsnasen gebildet sind, bilden bei Anbringung des Befestigungselements (wie in Fig. 2C gezeigt) entsprechende Vertiefungen 30 im Blechteil. Hier erstrecken sich die Verdrehsicherungsnasen 24 in axialer Richtung 32 des Schaftteils an diesem entlang. Sie könnten sich stattdessen oder zusätzlich in radialen Richtungen an der Blechanlageschulter 22 erstrecken (nicht gezeigt).

Das Blechteil in der Ausführung gemäß Fig. 2A bis 2C gilt als dünneres Blechteil und weist eine Dicke im Bereich von 3 bis 4,5 mm auf.

Es ist ferner aus Fig. 1A bis 1C und 2A bis 2C ersichtlich, dass der Flanschteil im radialen Querschnitt bzw. in Draufsicht kreisrund ist und dass der Flanschteil in Seitenansicht eine ballige Form aufweist.

Ferner ist ersichlicht, dass das Befestigungselement 10 einen hohlen Schaftteil 14 aufweist und dass das mittlere Gewinde 28 sich durch den Flanschteil 12 und den Schaftteil 14 hindurch erstreckt und über einen konischen Gewindeeinlauf 34 und eine radiale Schulter 36 in den Nietabschnitt 18 übergeht.

Das Zusammenbauteil nach den Fig. 2B und 2C mit einem dünneren Blechteil 25 wird dadurch hergestellt, dass dieses mit einem Lochstempel und Matrize vorgelocht wird, um eine glatt gelochte zylindrische Öffnung 40 auszubilden, die einen Durchmesser D2 hat, der zumindest im Wesentlichen dem Durchmesser des Schaftteils 14 entspricht. Zu diesem Zweck wird das Blechteil 25 in einer Presse zwischen einer Matrize im unteren Werkzeug der Presse und einem Stempel im oberen Werkzeug der Presse oder in einer Zwischenplatte der Presse eingesetzt, wobei die Matrize eine Öffnung aufweist, mit einem Durchmesser, der nur geringfügig größer ist als der Durchmesser des Stempels, der dem Durchmesser D2 entspricht. Bei der Schließung der Presse wird der Stempel durch das Blechteil hindurch gestoßen und es entsteht ein Stanzbutzen, der durch die Öffnung der Matrize hindurch gepresst und entsorgt wird. Dadurch, dass die Öffnung der Matrize zumindest im Wesentlichen dem Außendurchmesser des Stempels entspricht und nur geringfügig größer als dieser ist, entsteht eine zylindrische Lochung 40 mit glatten Wänden im Blechteil.

Es soll darauf hingewiesen werden, dass es auch möglich wäre, die Matrize an der Zwischenplatte der Presse und den Stempel im oberen Werkzeug der Presse oder den Stempel am unteren Werkzeug der Presse und die Matrize oberhalb des Stempels am oberen Werkzeug der Presse oder an der Zwischenplatte der Presse anzubringen. Auch könnte der Stempel an der Zwischenplatte der Presse angebracht werden und die Matrize am oberen Werkzeug der Presse. Ferner bestünde die Möglichkeit, die Matrize und den Stempel in einem so genannten C-Gestell zu montieren und durch entsprechende hydraulische Belastung des einen oder anderen Teils, d.h. die Matrize oder den Stempel, die Lochung des Blechteils vorzunehmen.

Der Schafteil 14 des Befestigungselements 10 wird durch die zylindrische Lochung 40 hindurchgepresst bis die Blechanlageschulter 22 des Flanschteils 12 an der einen Seite 42 des Blechteils anliegt und die Verdrehsicherungsmerkmale bzw. -nasen 24 sich in das Blechteil eingegraben haben. Der zylindrische Nietabschnitt 18 wird mittels einer geeigneten Matrize (nicht gezeigt) zu einem Nietbördel 44 umgeformt, das auf der der Blechanlageschulter 22 abgewandten Seite 46 des Blechteils anliegt.

Die Anbringung des Befestigungselements an das Blechteil erfolgt üblicherweise auch in einer Presse. Dafür wird das Befestigungselement 12 üblicherweise in einen Setzkopf aufgenommen, und es wird unterhalb des Blechteils eine Nietmatrize positioniert mit einem Stirnende mit einer Form komplementär zum Nietbördel 44 auf der Unterseite des Blechteils. Die Matrize kann beispielsweise eine Ringnut in der Stirnseite aufweisen, die im radialen Querschnitt einem Halbkreis ähnelt, wie auch das Nietbördel 44. D.h., die halbkreisförmige Ringnut in der Stirnseite der Matrize umringt einen Vorsprung, der im Bereich 46 radial innerhalb des Nietbördels 44 hineinpasst und an die Ringschulter 36 anstößt. Außerhalb der Ringnut liegt ebenfalls eine planare Fläche, die in Berührung mit der Unterseite 46 des Blechteils 25 gelangt. Durch Schließen der Presse wird das Befestigungselement von einer Stelle oberhalb des Blechteils 25 so bewegt, dass der Schaftteil 14 des Befestigungselements sich durch die Lochung 40 hindurchbewegt, bis der Nietabschnitt 18 mit der Ringnut der nicht gezeigten Matrize in Berührung gelangt und das Nietbördel entsprechend geformt wird. Die Presse liefert auch die erforderliche Kraft, um die Verdrehsicherungsnasen 24 durch die Seitenwand der Lochung hindurchzupressen, wodurch sich in axialer Richtung erstreckende Furchen in der zylindrischen Seitenwand der Lochung 40 durch die Verdrehsicherungsnasen 24 geformt werden.

Auch hier kann die Nietmatrize am unteren Werkzeug der Presse und der Setzkopf am oberen Werkzeug der Presse oder an einer Zwischenplatte der Presse angebracht werden oder in einer umgekehrten Anordnung kann der Setzkopf am unteren Werkzeug der Presse oder an der Zwischenplatte der Presse angebracht werden, während die Nietmatrize an der Zwischenplatte bzw. am oberen Werkzeug der Presse montiert ist. Auch hier kann die Nietmatrize oder der Setzkopf von einer entsprechend Betätigungseinrichtung eines C-förmigen Gestells getragen werden.

Wenn eine Presse zur Anwendung gelangt, so können die entsprechenden Werkzeuge als Folgeverbundwerkzeuge ausgelegt werden, wobei in einer ersten Station die Lochung vorgenommen wird und in einer zweiten Station das Befestigungselement in die vorher erzeugte Lochung hineingeführt wird. Das Folgeverbundwerkzeug kann aber auch weitere Stationen haben, so dass auch weitere Arbeitsschritte in der Presse gleichzeitig vorgenommen werden. Eine solche Anordnung funktioniert so, dass das Blechteil kontinuierlich durch die Presse hindurch bewegt wird, so dass bei jedem Hub der Presse Bearbeitungsvorgänge am Blechstreifen in jeder Arbeitsstation der Presse gleichzeitig durchgeführt werden. Nach dem Verlassen der Presse oder in der Presse werden dann die einzelnen Blechteile voneinander bzw. vom Bleichstreifen getrennt.

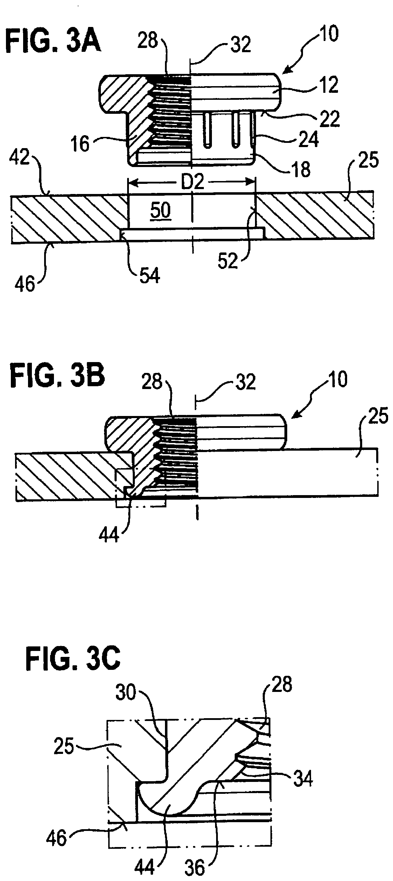

Die Herstellung eines Zusammenbauteils mit einem Blechteil mittlerer Dicke wird nunmehr anhand der Fig. 3A bis 3C erläutert. Es handelt sich hier um das gleiche Befestigungselement 10 wie in den bisherigen Beispielen. Es werden für gleiche Teile und gleiche Merkmale die gleichen Bezugszeichen verwendet und es versteht sich, dass die bisherige Beschreibung genauso für die Teile bzw. Merkmale mit den gleichen Bezugszeichen gilt, es sei denn, es wird etwas Gegenteiliges zum Ausdruck gebracht. Bei dieser Ausführungsform wird ein gestuftes Loch 50 im Blechteil angefertigt mit einem zylindrischen, der Blechanlageschulter zugewandten Lochteil 52 kleineren Durchmessers D2, der dem Durchmesser D2 des Schaftteils 14 zumindest im Wesentlichen entspricht und mit einem Lochbereich 54 größeren Durchmessers. Das gestufte Loch 50 kann beispielsweise durch einen Bohrvorgang oder durch einen zweistufigen Pressvorgang hergestellt werden.

Die Herstellung eines gestuften Loches der gezeigten Art mittels eines Fräswerkzeuges oder eines besonders geschliffenen Bohrers ist an sich gut bekannt. Durch Herstellung einer solchen Bohrung in einem zweistufigen Pressvorgang wird zunächst das Blechteil 25 mit einem Lochstempel und einer Matrize wie oben beschrieben gelocht, wobei das Blechteil etwas größer gelocht wird als erforderlich, d.h. mit einem Durchmesser, der geringfügig größer als D2 ist oder, wie unten näher erläutert, konusförmig gelocht, so dass eine divergierende konusförmige Lochung entsteht. Das Blechteil wird dann in einer weiteren Bearbeitungsstation mit einem zweiten Stempel auf der einen Seite (die Unterseite 46 in Fig. 3) bearbeitet, um mit dem zweiten Stempel den Lochbereich größeren Durchmessers zu erzeugen. Bei dieser Bearbeitung fließt Metall in das zuvor erzeugte Loch hinein, so dass der Lochdurchmesser im Lochteil kleineren Durchmessers verringert wird, bevorzugter Weise auf einen Wert entsprechend D2.

Der Schaftteil 14 des Befestigungselements 10 wird dann wie bei der Fig. 2A bis 2C-Ausführung beschrieben durch das Loch 50 hindurchgepresst bis die Blechanlageschulter 22 des Flanschteils 12 an der einen Seite 42 des Blechteils anliegt und die Verdrehsicherungsmerkmale bzw. -nasen 24 sich in das Blechteil eingegraben haben wie bei 30 angedeutet. Der zylindrische Nietabschnitt 18 wird zu einem Nietbördel 44 umgeformt, das in den Lochbereich 54 größeren Durchmessers aufgenommen wird. Bei dieser Variante bildet die Blechunterseite 46 eine planare Anschraubfläche für ein weiteres Bauteil, d.h. das Nietbördel 44 ragt nicht über die Blechunterseite 46 heraus.

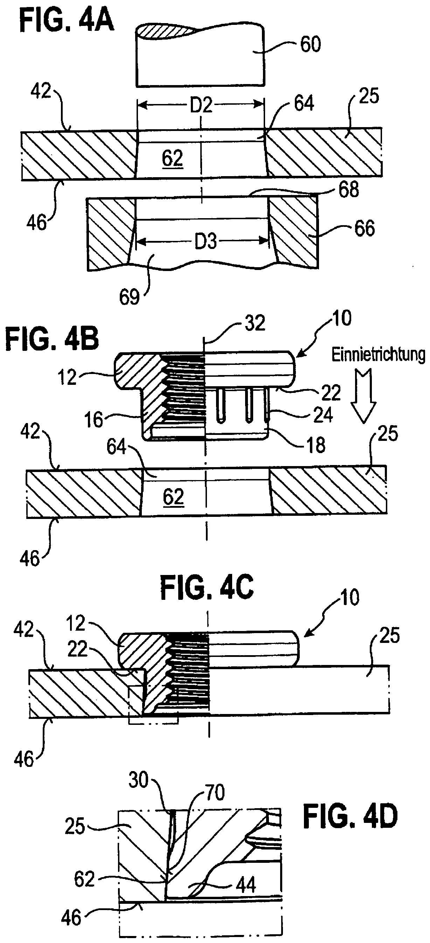

Eine weitere Variante des Verfahrens zur Herstellung des erfindungsgemäßen Zusammenbauteils ist in den Fig. 4A bis 4D zeichnerisch dargestellt. Dieses Verfahren kann mit dickeren Blechteilen oder mit Blechteilen mittlerer Dicke verwendet werden, wobei die Verwendung des Verfahrens mit einem Blechteil mittlerer Dicke hier gezeigt wird. Bei dieser Ausführung wird das Blechteil mit einem Lochstempel 60 oder anderweitig vorgelocht, um eine konusförmige Lochung 62 auszubilden, die in Richtung von der der Blechanlageschulter 22 zugewandten Seite 46 des Blechteils 25 zu der dieser abgewandten Seite 44 hin divergiert, wobei die Lochung 42 auf der der Blechanlageschulter 22 zugewandten Seite 64 einen Durchmesser D2 hat, der zumindest im Wesentlichen dem Durchmesser D2 des Schaftteils 14 entspricht.

Zur Erzeugung dieser konusförmig divergierenden Lochung 62 wird hier eine Matrize 66 verwendet, die eine kreisförmige Öffnung 68 aufweist mit einem Durchmesser D2 größer als der Durchmesser D2 des zylindrischen Lochstempels 60. Die mittlere Passage 69 der Matrize unterhalb der Öffnung 68 ist ebenfalls konusförmig (oder gestuft) ausgebildet, um den Stanzbutzen passieren zu lassen.

Die Konizität der konusförmig divergierenden Bereich 62 der Lochung im Blechteil kann durch Wahl des Durchmessers D3 der Öffnung 68 der Matrize im Vergleich zu dem Durchmesser D1 des Stempels innerhalb der erforderlichen Grenzen gewählt werden. Vorzugsweise strebt man einen eingeschlossenen Konuswinkel von beispielsweise etwa 7° an.

Der Stempel 60 und die Matrize 66 kommen, wie im Zusammenhang mit der Ausführung gemäß 2A bis 2C beschrieben, in einer Presse zur Anwendung (alternativ hierzu kann auch ein C-Gestell verwendet werden), wie ebenfalls oben beschrieben.

Je dicker das Blechteil desto größer muss der Durchmesser D3 der Öffnung 68 sein, um eine Lochung mit der erwünschten Konusform zu erzeugen.

Bei der Verwendung eines Lochstempels mit einer Lochmatrize größeren Durchmessers fängt zunächst das freie Stirnende des Stempels an einen Stanzbutzen aus dem Blechteil zu schneiden. Sobald die Schneidkräfte einen bestimmten Wert erreichen, bricht das Material, so dass ein konusförmiger Stanzbutzen aus dem Blechteil herausgedrückt wird. Diese Art des Entstehens führt dazu, dass der obere Bereich der Lochung, wie bei 64 gezeigt, die Form eines Kreiszylinders entsprechend der Form des Stempels 60 aufweist, während der in diesem Beispiel untere Bereich 62 die gewünschte Konusform erhält.

Die Anbringung des Befestigungselements an das Blechteil erfolgt auch in einer Presse, d.h. in einer weiteren Station der gleichen Presse oder in einer getrennten Presse. Der Schaftteil 14 des Befestigungselements 10 wird durch die Lochung 62 hindurchgepresst bis die Blechanlageschulter 22 des Flanschteils 12 an der einen Seite 42 des Blechteils 25 anliegt und die Verdrehsicherungsmerkmale bzw. -nasen 24 sich in das Blechteil 25 eingegraben haben wie bei 30 angedeutet. Der zylindrische Nietabschnitt 18 wird mittels einer entsprechenden Nietmatrize zu einem konusförmigen Nietbördel 44 umgeformt, das sich in der konusförmig divergierenden Lochung 62 verkeilt.

Dadurch, dass der Nietabschnitt zu dem Nietbördel 44 aufgeweitet wird, erlangt dieser an der Außenseite 70 eine ebenfalls divergierende Konusform, die der Konusform der Lochung 62 angepasst ist. Man sieht, dass das Nietbördel 44 auch hier vollständig oberhalb der unteren Seite 46 des Blechteils 25 liegt, d.h. die Seite 46 bildet auch hier eine planare Anschraubseite.

Besonders vorteilhaft bei dieser Ausführung ist, dass die gleiche Befestigungsart mit ganz verschiedenen Blechteildicken verwendet werden kann, ohne dass die Auslegung des Befestigungselements geändert werden muss. Es ist lediglich erforderlich, die Auslegung der Nietmatrize an die jeweilige Dicke des Blechteils anzupassen. Die Nietmatrize muss auch an die jeweilige Größe des Gewindes des Befestigungselements, d.h. an das Befestigungselement selbst, angepasst werden.

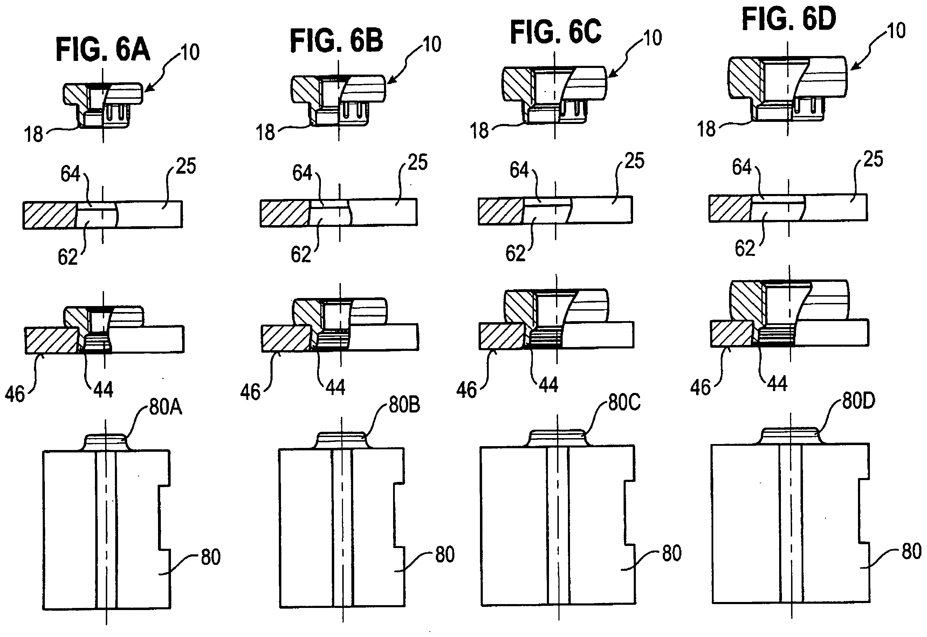

Um diesen Punkt näher zu erläutern, wird zunächst auf die Figuren 6A bis 6D verwiesen, die im Grunde genommen jeweils das gleiche zeigen wie die Figuren 4B und 4C, jedoch zusammen mit der jeweils verwendeten Nietmatrize 80. Man merkt, dass entsprechend der Figur 4C das Nietbördel 44 kurz oberhalb der Unterseite 46 des Blechteils 25 zu Ende geht. Man sieht auch aus einem Vergleich der Zeichnungen der Fig. 6A, 6B, 6C und 6D, dass die Nietmatrize jeweils einen Matrizenvorsprung 80A, 80B, 80C und 80D aufweist, die für die Umbördelung, d.h. die Weitung und Verformung des Nietabschnitts 18 des Elements ausgelegt ist, wobei der Matrizenvorsprung 80A an die Gewindegröße M8, der Matrizenvorsprung 80B an die Gewindegröße M10, der Vorsprung 80C an die Gewindegröße M12 und der Matrizenvorsprung 80D an die Gewindegröße M14 angepasst ist. Die Erfindung ist aber keinesfalls auf nur diese Gewindegrößen beschränkt, sondern es können auch andere Gewindegrößen genauso verarbeitet werden, d.h. auch Elemente mit Gewindegrößen von M20 und mehr.

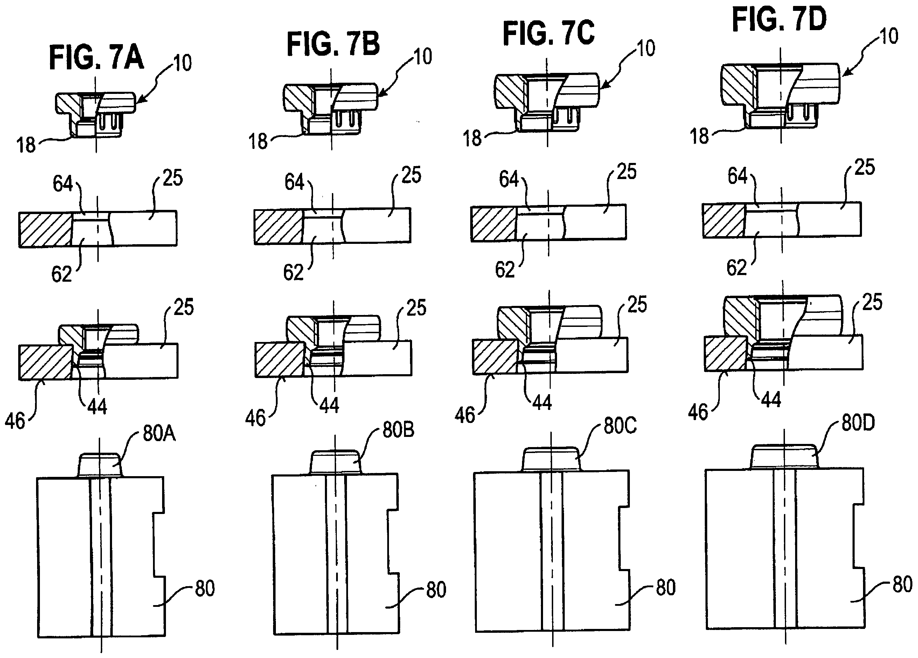

Die Figur 7 zeigt dann das gleiche Verfahren mit einem dickeren Blechteil, wo das geweitete Nietbördel 44 jetzt deutlich oberhalb der Blechunterseite 46 zu Ende geht, da eben das Blechteil 25 hier deutlich dicker ist als das Blechteil 25 der Fig. 6A bis 6D.

Auch hier werden die Matrizen für die Gewindegrößen M8, M10, M12 und M14 gezeigt. Man sieht, dass der Matrizenvorsprung 80A, 80B, 80C und 80D hier zwar eine ähnliche Form wie bei der Ausführung gemäß Fig. 6A bis 6D hat, jedoch eine größere axiale Höhe, damit die Weitung des Nietabschnitts des Befestigungselements 10 auf die erwünschte Art und Weise vorgenommen werden kann.

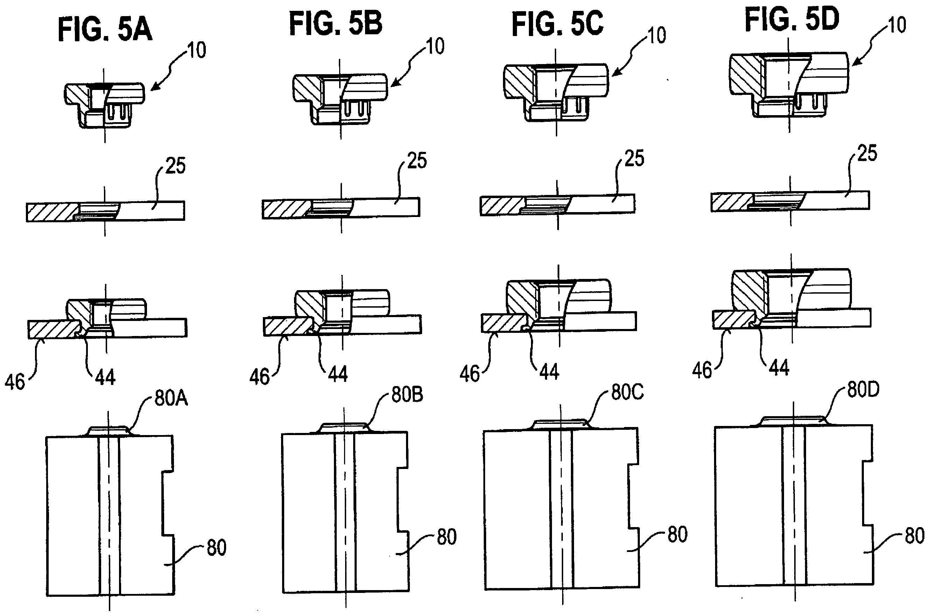

Schließlich zeigen die Fig. 5A bis 5D die Matrizen, die für die Gewindegrößen M8, M10, M12 und M14 verwendet werden, um das Nietbördel 44 innerhalb des Lochbereiches 54 größeren Durchmessers bei einem gestuften Loch 50 zu bilden. Hier werden die Befestigungselemente so gewählt, dass der Schaftteil 14 relativ kurz ausfällt. Wird der Schaftteil noch kürzer gemacht, so kann auch diese Ausführung bei dünnsten Blechen verwendet werden, d.h. beispielsweise von 3 mm oder geringfügig größer bis beispielsweise 4,5 mm Dicke, so dass vermieden werden kann, dass das Nietbördel über die Unterseite 46 des Blechteils 25 hinausragt. Auch hier werden die Nietmatrizen für die Gewindegrößen M8, M10, M12 und M14 gezeigt.

Es soll darauf hingewiesen werden, dass die Bezeichnung "dünnere Blechteile, Blechteile mittlerer Dicke und dickere Blechteile" relative Bezeichnungen sind, und dass die konkreten Abmessungen nicht fest vorgegeben werden können, sondern entsprechend der Auslegung des Befestigungselements gewählt werden. Dabei ist es wichtig, dass es für eine Gewindegröße möglich ist, mit einem Element eine breite Palette von Blechdicken abzudecken, beispielsweise von 3 mm bis 20 mm oder noch mehr. Auf diese Weise wird trotz der eher geringen Stückzahlen, die für beispielsweise LKWs benötigt werden, doch insgesamt größere Stückzahlen der Elemente erreicht, so dass diese preisgünstig hergestellt werden können. Auch vereinfacht sich die Lagerhaltung der Elemente auf diese Weise.

Es soll zum Ausdruck gebracht werden, dass die in dieser Anmeldung beschriebenen und/oder beanspruchten Verdrehsicherungsmerkmale nicht nur durch Erhebungen, sondern auch durch Vertiefungen am Befestigungselement ausgeführt werden könnten. In diesem Fall muss das Befestigungselement bzw. das Mutterelement ein leichtes Übermaß gegenüber der Bohrung haben. Auch käme eine Mischung aus erhabenen und zurückliegenden Verdrehsicherungsmerkmalen in Frage, beispielsweise eine Reihenfolge von sich abwechselnden Verdrehsicherungsnasen und - vertiefungen, die sich um den Umfang des Schaftteils und/oder an der Blechanlageschulter befinden und vorzugsweise - wie auch die bisher beschriebenen Verdrehsicherungsmerkmale - in regelmäßigen Abständen angeordnet sind. Die Gesamtzahl der Verdrehsicherungsmerkmale ist unkritisch, es können ohne weiteres und ohne Einschränkung von 2 bis 18 und vorzugsweise 3 bis 12 Verdrehsicherungsmerkmale um die Längsachse des Befestigungselements herum vorgesehen werden.

Ferner soll erwähnt werden, dass das Anwendungsgebiet der hier beanspruchten Zusammenbauteile nicht auf die Herstellung von LKWs beschränkt ist, sondern alle Gebieten umfasst, wo Blechteile entsprechender Stärke verwendet werden, die mit Befestigungselementen versehen werden müssen.

Bei allen Ausführungsformen können als Beispiel für den Werkstoff der Befestigungselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Befestigungselemente benutzt werden, z.B. AlMg5. Auch kommen Befestigungselemente aus höherfesten Magnesiumlegierungen wie beispielsweise AM50 in Frage.

## Patentansprüche

1. Zusammenbauteil bestehend aus einem Befestigungselement (10) und einem Blechteil (25), wobei das Befestigungselement (10) einen Flanschteil (12) größeren Durchmessers (D1) und einen Schaftteil (14) kleineren Durchmessers (D2) aufweist, der sich vom Flanschteil (12) wegerstreckt und an seinem dem Flanschteil (12) abgewandten Ende (16) in einen zylinderförmigen Nietabschnitt (18) übergeht, dessen Außenseite zumindest im Wesentlichen bündig mit der Außenseite des Schaftteils (14) liegt, d.h. den gleichen Durchmesser (D2) aufweist, wobei die dem Schaftteil (14) zugewandte Seite des Flanschteils (12) eine Blechanlageschulter (22) bildet, und Verdrehsicherungsmerkmale (24) am Schaftteil (14) und/oder im Bereich der Blechanlageschulter (22) vorgesehen sind,
**dadurch gekennzeichnet,**
**dass** das Befestigungselement zur Anwendung mit Blechteilen (25) mit Dicken im Bereich von 3 mm und größer ausgelegt ist, und dass das Blechteil sowohl im unmittelbaren Bereich der Anbringung des Befestigungselements als auch in radialen Richtungen benachbart zur Anbringungsstelle vor und nach Anbringung des Befestigungselements in einer Ebene liegt und
a) bei relativ dünnen Blechteilen mit einer Dicke von 3 bis 4,5 mm das Blechteil (25) eine glatt gelochte zylindrische Öffnung (40) aufweist, die einen Durchmesser (D2) hat, der zumindest im Wesentlichen dem Durchmesser (D2) des Schaftteils (14) entspricht, wobei der zylindrische Nietabschnitt (18) zu einem Nietbördel (44) umgeformt ist, das auf der der Blechanlageschulter (22) abgewandten Seite (46) des Blechteils (25) anliegt, oder
b) bei Blechteilen mittlerer Dicke mit einer Dicke von 4,5 bis 6,5 mm das Blechteil (25) ein gestuftes Loch (50) aufweist mit einem zylindrischen, der Blechanlageschulter (22) zugewandten Lochteil (52) kleineren Durchmessers (D2), der dem Durchmesser (D2) des Schaftteils (14) zumindest im Wesentlichen entspricht und mit einem Lochbereich (54) größeren Durchmessers, der den zu einem Nietbördel (44) umgebördelten Nietabschnitt (18) aufnimmt, oder
c) bei relativ dicken Blechteilen, bei denen das Blechteil (25) eine Dicke aufweist, die zumindest im Wesentlichen der Gesamtlänge des Schaftteils (14) und des Nietabschnitts (18) entspricht oder dicker ist, das Blechteil (25) mit einer konusförmigen Lochung (62) vorgesehen ist, die in Richtung von der die Blechanlageschulter (22) zugewanden Seite (42) des Blechteils (25) zu der dieser abgewandten Seite (46) hin divergiert, wobei der zylindrische Nietabschnitt (18) zu einem konusförmigen Nietbördel (44) umgeformt ist, das in der konusförmig divergierenden Lochung (62) verkeilt ist.

2. Zusammenbauteil nach Anspruch 1, **dadurch gekennzeichnet, dass** es sich bei dem Befestigungselement (10) um ein Mutterelement handelt.

3. Zusammenbauteil nach Anspruch 1, **dadurch gekennzeichnet, dass** die Verdrehsicherungsmerkmale (24) durch Verdrehsicherungsnasen gebildet sind, die bei Anbringung des Befestigungselements entsprechende Vertiefungen (30) im Blechteil bilden.

4. Zusammenbauteil nach Anspruch 3, **dadurch gekennzeichnet, dass** die Verdrehsicherungsnasen (24) sich in axialer Richtung (32) des Schaftteils (14) an diesem entlang erstrecken und/oder sich in radialen Richtungen an der Blechanlageschulter (22) erstrecken.

5. Zusammenbauteil nach einem der vorhergehenden Ansprüche,
**dadurch gekennzeichnet, dass** dickere Blechteile (25) eine Dicke größer als 6,5 mm aufweisen.

6. Zusammenbauteil nach einem der vorhergehenden Ansprüche,
**dadurch gekennzeichnet, dass** der Flanschteil (12) im radialen Querschnitt kreisrund ist.

7. Zusammenbauteil nach einem der vorhergehenden Ansprüche
**dadurch gekennzeichnet, dass** der Flanschteil (12) in Seitenansicht eine ballige Form aufweist.

8. Zusammenbauteil nach einem der vorhergehenden Ansprüche,
**dadurch gekennzeichnet, dass** das Befestigungselement (10) einen hohlen Schaftteil (14) mit einem mittleren Gewinde (28) aufweist, das sich durch den Flanschteil (12) und den Schaftteil (14) hindurch erstreckt.

9. Verfahren zur Herstellung eines Zusammenbauteils nach einem der vorhergehenden Ansprüchen mit einem dünneren Blechteil (25), **dadurch gekennzeichnet, dass** dieses mit einem Lochstempel vorgelocht wird, um eine glatt gelochte zylindrische Öffnung (40) auszubilden, die einen Durchmesser (D2) hat, der zumindest im Wesentlichen dem Durchmesser (D2) des Schaftteils (14) entspricht, wobei der Schaftteil (14) des Befestigungselements (10) durch die zylindrisehe Lochung (40) hindurchgepresst wird bis die Blechanlageschulter (22) des Flanschteils (12) an der einen Seite des Blechteils (25) anliegt und die Verdrehsicherungsmerkmale bzw. -nasen (24) sich in das Blechteil (25) eingegraben haben und der zylindrische Nietabschnitt (18) zu einem Nietbördel (44) umgeformt ist, das auf der der Blechanlageschulter (22) abgewandten Seite (46) des Blechteils (25) anliegt.

10. Verfahren zur Herstellung eines Zusammenbauteils nach einem der vorhergehenden Ansprüche 1 bis 8 mit einem Blechteil (25) mittlerer Dicke, **dadurch gekennzeichnet, dass** ein gestuftes Loch (50) im Blechteil (25) angefertigt wird mit einem zylindrischen, der Blechanlageschulter (22) zugewandten Lochteil (52) kleineren Durchmessers (D2), der dem Durchmesser (D2) des Schaftteils (14) zumindest im Wesentlichen entspricht und mit einem Lochbereich (54) größeren Durchmessers, wobei der Schafteil (14) des Befestigungselements (10) durch das Loch (50) hindurchgepresst wird bis die Blechanlageschulter (22) des Flanschteils (12) an der einen Seite (42) des Blechteils (25) anliegt und die Verdrehsicherungsmerkmale bzw. -nasen (24) sich in das Blechteil (25) eingegraben haben, und der zylindrische Nietabschnitt (18) zu einem Nietbördel (44) umgeformt wird, das in den Lochbereich (54) größeren Durchmessers aufgenommen wird.

11. Verfahren nach Anspruch 10, **dadurch gekennzeichnet, dass** das gestufte Loch (50) durch einen Bohrvorgang oder durch einen zweistufigen Pressvorgang hergestellt wird.

12. Verfahren zur Herstellung eines Zusammenbauteils nach einem der vorhergehenden Ansprüche 1 bis 8 mit einem relativ dicken Blechteil (25), **dadurch gekennzeichnet, dass** dieses mit einem Lochstempel (60) oder anderweitig vorgelocht wird, um eine konusförmige Lochung (62) auszubilden, die in Richtung von der der Blechanlageschulter (22) zugewandten Seite (42) des Blechteils (25) zu der dieser abgewandten Seite (46) hin divergiert, wobei die Lochung (62) auf der der Blechanlageschulter (22) zugewandten Seite (64)einen Durchmesser (D2) hat, der zumindest im Wesentlichen dem Durchmesser (D2) des Schaftteils (14) entspricht, wobei der Schaftteil (14) des Befestigungselements (10) durch die Lochung (62) hindurchgepresst wird bis die Blechanlageschulter (22) des Flanschteils (12) an der einen Seite (42) des Blechteils (25) anliegt und die Verdrehsicherungsmerkmale bzw. -nasen (24) sich in das Blechteil (25) eingegraben haben, und der zylindrische Nietabschnitt (18) zu einem konusförmigen Nietbördel (44) umgeformt wird, das sich in der konusförmig divergierenden Lochung (62) verkeilt.

13. Verfahren nach Anspruch 12, **dadurch gekennzeichnet, dass** die sich konusförmig erstreckende Lochung (62) sich an einen zylindrischen Bereich (64) der Lochung anschließt, der benachbart zur Blechanlageschulter (22) ausgebildet wird.

14. Verfahren nach einem der Ansprüche 12 oder 13, **dadurch gekennzeichnet, dass** die konusförmige Lochung (62) unter Anwendung eines Lochstempels (60) mit einem Durchmesser (D2) entsprechend dem Durchmesser des Schaftteils (14) in Kombination mit einer Lochmatrize (66) größeren Durchmessers (D3) hergestellt wird.

## Claims

1. A component assembly comprising a fastener element (10) and a sheet metal part (25), wherein the fastener element (10) has a flange part (12) of a larger diameter (D1) and a shaft part (14) of a smaller diameter (D2) which extends away from the flange part (12) and merges at its end (16) remote from the flange part (12) into a cylindrical rivet section (18) the outer side of which is at least substantially flush with the outer side of the shaft part (14), i.e. has the same diameter (D2), wherein the side of the flange part (12) facing the shaft part (14) forms a sheet metal contact shoulder (22), and wherein features (24) providing security against rotation are provided at the shaft part (14) and/or in the region of the sheet metal contact shoulder (22),
**characterized in that**
the fastener element is configured for use with sheet metal parts (25) having thicknesses in the range of 3 mm and larger; and **in that** the sheet metal part lies in one plane both in the direct region of attachment of the fastener element and in radial directions adjacent to the point of attachment prior to and after attachment of the fastener element and,
a) for relatively thin sheet metal parts having a thickness of 3 to 4.5 mm, the sheet metal part (25) has a smoothly pierced cylindrical opening (40) which has a diameter (D2) which corresponds at least substantially to the diameter (D2) of the shaft part (14), with the cylindrical rivet section (18) being reshaped into a rivet bead (44) which contacts the side (46) of the sheet metal part (25) remote form the sheet metal contact shoulder (22) or,
b) for sheet metal parts of medium thickness having a thickness of 4.5 to 6.5 mm, the sheet metal part (25) has a stepped hole (50) having a cylindrical hole part (52) facing the sheet metal contact shoulder (22) of a smaller diameter (D2) which corresponds at least substantially to the diameter (D2) of the shaft part (14), and having a hole region (54) of a larger diameter which receives the rivet section (18) which has been beaded over to form a rivet bead (44) or,
c) for relatively thick sheet metal parts in which the sheet metal part (25) has a thickness which corresponds at least substantially to the total length of the shaft part (14) and the rivet section (18) or is thicker, the sheet metal part (25) is provided with a conical hole (62) which diverges in the direction from the side (42) of the sheet metal part (25) facing the sheet metal contact shoulder (22) to the side (46) remote therefrom, with the cylindrical rivet section (18) being reshaped into a conical rivet bead (44) which is wedged in the conically diverging hole (62).

2. A component assembly in accordance with claim 1, **characterized in that** the fastener element (10) is a nut element.

3. A component assembly in accordance with claim 1, **characterized in that** the features (24) providing security against rotation are formed by noses providing security against rotation which, on attachment of the fastener element, form corresponding recesses (30) in the sheet metal part.

4. A component assembly in accordance with claim 3, **characterized in that** the noses (24) providing security against rotation extend in the axial direction (32) of the shaft part (14) along the latter and/or extend in radial directions at the sheet metal contact shoulder (22).

5. A component assembly in accordance with any one of the preceding claims, **characterized in that** thicker sheet metal parts (25) have a thickness greater than 6.5 mm.

6. A component assembly in accordance with any one of the preceding claims, **characterized in that** the flange part (12) is circular in radial cross-section.

7. A component assembly in accordance with any one of the preceding claims, **characterized in that** the flange part (12) has a rounded form in side view.

8. A component assembly in accordance with any one of the preceding claims, **characterized in that** the fastener element (10) has a hollow shaft part (14) with a central thread (28) which extends through the flange part (12) and the shaft part (14).

9. A method of manufacturing a component assembly in accordance with any one of the preceding claims comprising a thinner sheet metal part (25), **characterized in that** said sheet metal part (25) is pierced by a piercing punch to form a smoothly pierced cylindrical opening (40) which has a diameter (D2) which corresponds at least substantially to the diameter (D2) of the shaft part (14), with the shaft part (14) of the fastener element (10) being pressed through the cylindrical hole (40) until the sheet metal contact shoulder (22) of the flange part (12) contacts the one side of the sheet metal part (25) and the features or noses (24) providing security against rotation have dug into the sheet metal part (25) and the cylindrical rivet section (18) is reshaped into a rivet bead (44) which contacts the side (46) of the sheet metal part (25) remote from the sheet metal contact shoulder (22).

10. A method of manufacturing a component assembly in accordance with any one of the preceding claims 1 to 8 comprising a sheet metal part (25) of medium thickness, **characterized in that** a stepped hole (50) is prepared in the sheet metal part (25), said stepped hole (50) having a cylindrical hole part (52) facing the sheet metal contact shoulder (22) of a smaller diameter (D2) which corresponds at least substantially to the diameter (D2) of the shaft part (14), and having a hole region (54) of a larger diameter, with the shaft part (14) of the fastener element (10) being pressed through the hole (50) until the sheet metal contact shoulder (22) of the flange part (12) contacts the one side (42) of the sheet metal part (25) and the features or noses (24) providing security against rotation have dug into the sheet metal part (25) and the cylindrical rivet section (18) is reshaped into a rivet bead (44) which is received in the hole region (54) of a larger diameter.

11. A method in accordance with claim 10, **characterized in that** the stepped hole (50) is produced by a drilling process or by a two-stage pressing process.

12. A method of manufacturing a component assembly in accordance with any one of the preceding claims 1 to 8 comprising a relatively thick sheet metal part (25), **characterized in that** said sheet metal part (25) is pre-pierced by a piercing punch (60) or otherwise to form a conical hole (62) which diverges in the direction from the side (42) of the sheet metal part (25) facing the sheet metal contact shoulder (22) to the side (46) remote therefrom, with the hole (62) having a diameter (D2) at the side (64) facing the sheet metal contact shoulder (22) which corresponds at least substantially to the diameter (D2) of the shaft part (14), with the shaft part (14) of the fastener element (10) being pressed through the hole (62) until the sheet metal contact shoulder (22) of the flange part (12) contacts the one side (42) of the sheet metal part (25) and the features or noses (24) providing security against rotation have dug into the sheet metal part (25) and the cylindrical rivet section (18) is reshaped into a conical rivet bead (44) which is wedged in the conically diverging hole (62).

13. A method in accordance with claim 12, **characterized in that** the conically extending hole (62) adjoins a cylindrical region (64) of the hole which is formed adjacent to the sheet metal contact shoulder (22).

14. A method in accordance with one of the claims 12 or 13, **characterized in that** the conical hole (62) is produced using a piercing punch (60) having a diameter (D2) corresponding to the diameter of the shaft part (14) in combination with a piercing die (66) of a larger diameter (D3).

## Revendications

1. Composant assemblé constitué par un élément de fixation (10) et par une pièce en tôle (25),
dans lequel
l'élément de fixation (10) présente une partie de bride (12) de grand diamètre (D1) et une partie de tige (14) de petit diamètre (D2) s'étendant en éloignement depuis la partie de bride (12) et se transformant, à son extrémité (16) détournée de la partie de bride (12), en une portion de rivetage cylindrique (18) dont la face extérieure est au moins sensiblement en affleurement avec la face extérieure de la partie de tige (14), c'est-à-dire qu'elle présente le même diamètre (D2),
la face de la partie de bride (12) tournée vers la partie de tige (14) constitue un épaulement d'appui de tôle (22), et
des caractéristiques de blocage anti-rotation (24) sont prévues sur la partie de tige (14) et/ou dans la zone de l'épaulement d'appui de tôle (22), **caractérisé en ce que**
l'élément de fixation est conçu pour l'utilisation avec des pièces en tôle (25) ayant des épaisseurs dans la plage de 3 mm et plus,
et **en ce que**
la pièce en tôle se situe dans un plan aussi bien directement au niveau du montage de l'élément de fixation qu'au voisinage de l'emplacement de montage dans des directions radiales, avant et après le montage de l'élément de fixation, et
a) pour des pièces en tôle relativement minces ayant une épaisseur de 3 à 4,5 mm, la pièce en tôle (25) présente une ouverture cylindrique (40) percée lisse qui présente un diamètre (D2) qui correspond au moins sensiblement au diamètre (D2) de la partie de tige (14), la portion de rivetage cylindrique (18) étant mise en forme de serti de rivetage (44) qui prend appui contre la face (46) de la pièce en tôle (25) détournée de l'épaulement d'appui de tôle (22), ou
b) pour des pièces en tôle ayant une épaisseur moyenne, une épaisseur de 4,5 à 6,5 mm, la pièce en tôle (25) présente un trou étagé (50) ayant une partie de trou (52) cylindrique tournée vers l'épaulement d'appui de tôle (22) et ayant un petit diamètre (D2) qui correspond au moins sensiblement au diamètre (D2) de la partie de tige (14), et ayant une zone de trou (54) de grand diamètre qui reçoit la portion de rivetage (18) sertie en forme de serti de rivetage (44), ou
c) pour des pièces en tôle relativement épaisses dans lesquelles la pièce en tôle (25) présente une épaisseur qui correspond au moins sensiblement à la longueur totale de la partie de tige (14) et de la portion de rivetage (18) ou bien qui est plus épaisse, la pièce en tôle (25) est pourvue d'un trou conique (62) qui diverge en direction depuis la face (42) de la pièce en tôle (25) tournée vers l'épaulement d'appui de tôle (22) jusqu'à la face (46) détournée de celui-ci, la portion de rivetage cylindrique (18) étant mise en forme de serti de rivetage conique (44) qui est calé dans le trou (62) divergeant en forme conique.

2. Composant assemblé selon la revendication 1,
**caractérisé en ce que**
l'élément de fixation (10) est un élément formant écrou.

3. Composant assemblé selon la revendication 1,
**caractérisé en ce que**
les caractéristiques de blocage anti-rotation (24) sont formées par des ergots de blocage anti-rotation qui forment des renfoncements (30) correspondants dans la pièce en tôle lors du montage de l'élément de fixation.

4. Composant assemblé selon la revendication 3,
**caractérisé en ce que**
les ergots de blocage anti-rotation (24) s'étendent en direction axiale (32) de la partie de tige (14) le long de celle-ci et/ou en directions radiales sur l'épaulement d'appui de tôle (22).

5. Composant assemblé selon l'une des revendications précédentes,
**caractérisé en ce que**
des pièces en tôle (25) plus épaisses présentent une épaisseur supérieure à 6,5 mm.

6. Composant assemblé selon l'une des revendications précédentes,
**caractérisé en ce que**
la partie de bride (12) est circulaire en section transversale radiale.

7. Composant assemblé selon l'une des revendications précédentes,
**caractérisé en ce que**
la partie de bride (12) présente une forme bombée, en vue latérale.

8. Composant assemblé selon l'une des revendications précédentes,
**caractérisé en ce que**
l'élément de fixation (10) présente une partie de tige creuse (14) pourvue d'un taraudage central (28) qui s'étend à travers la partie de bride (12) et à travers la partie de tige (14).

9. Procédé de réalisation d'un composant assemblé selon l'une des revendications précédentes avec une pièce en tôle (25) mince,
**caractérisé en ce que**
celle-ci est pré-perforée au moyen d'un poinçon de perforation afin de réaliser une ouverture cylindrique (40) percée lisse qui présente un diamètre (D2) qui correspond au moins sensiblement au diamètre (D2) de la partie de tige (14), la partie de tige (14) de l'élément de fixation (10) étant pressée à travers le trou cylindrique (40) jusqu'à ce que l'épaulement d'appui de tôle (22) de la partie de bride (12) vienne s'appuyer contre une face de la pièce en tôle (25) et que les caractéristiques ou ergots de blocage anti-rotation (24) se soient enfoncé(e)s dans la pièce en tôle (25) et que la portion de rivetage cylindrique (18) soit mise en forme de serti de rivetage (44) qui s'appuie contre la face (46) de la pièce en tôle (25) détournée de l'épaulement d'appui de tôle (22).

10. Procédé de réalisation d'un composant assemblé selon l'une des revendications 1 à 8 avec une pièce en tôle (25) d'épaisseur moyenne,
**caractérisé en ce que**
un trou étagé (50) est ménagé dans la pièce en tôle (25), présentant une partie de trou (52) cylindrique tournée vers l'épaulement d'appui de tôle (22) et ayant un petit diamètre (D2) qui correspond au moins sensiblement au diamètre (D2) de la partie de tige (14), et présentant une zone de trou (54) de grand diamètre,
la partie de tige (14) de l'élément de fixation (10) est pressée à travers le trou (50) jusqu'à ce que l'épaulement d'appui de tôle (22) de la partie de bride (12) vienne s'appuyer contre une face (42) de la pièce en tôle et que les caractéristiques ou ergots de blocage anti-rotation (24) se soient enfoncé(e)s dans la pièce en tôle (25) et
la portion de rivetage cylindrique (18) est mise en forme de serti de rivetage (44) qui est reçu dans la zone de trou (54) de grand diamètre.

11. Procédé selon la revendication 10,
**caractérisé en ce que**
le trou étagé (50) est réalisé par une opération de perçage ou par une opération de pressage à deux étages.

12. Procédé de réalisation d'un composant assemblé selon l'une des revendications 1 à 8 avec une pièce en tôle (25) relativement épaisse,
**caractérisé en ce que**
celle-ci est pré-perforée au moyen d'un poinçon de perforation (60) ou autre, afin de former un trou conique (62) qui diverge en direction de la face (42) de la pièce en tôle (25) tournée vers l'épaulement d'appui de tôle (22) jusqu'à la face (46) détournée de celui-ci, et
sur la face (64) tournée vers l'épaulement d'appui de tôle (22), le trou (62) présente un diamètre (D2) qui correspond au moins sensiblement au diamètre (D2) de la partie de tige (14),
la partie de tige (14) de l'élément de fixation (10) est pressée à travers le trou (62) jusqu'à ce que l'épaulement d'appui de tôle (22) de la partie de bride (12) vienne s'appuyer contre une face (42) de la pièce en tôle (25) et que les caractéristiques ou ergots de blocage anti-rotation (24) se soient enfoncé(e)s dans la pièce en tôle (25), et
la portion de rivetage cylindrique (18) est mise en forme de serti de rivetage (44) qui se cale dans le trou (62) divergeant en forme conique.

13. Procédé selon la revendication 12,
**caractérisé en ce que**
le trou (62) s'étendant en forme conique se raccorde à une zone cylindrique (64) du trou, qui est réalisée au voisinage de l'épaulement d'appui de tôle (22).

14. Procédé selon l'une des revendications 12 ou 13,
**caractérisé en ce que**
le trou conique (62) est réalisé en utilisant un poinçon de perforation (60) ayant un diamètre (D2) qui correspond au diamètre de la partie de tige (14), en combinaison avec une matrice de perforation (66) de grand diamètre (D3).
